# EUROPÄISCHE PATENTSCHRIFT

(11) **EP 0 894 684 B1**
(45) Veröffentlichungstag und Bekanntmachung des Hinweises auf die Patenterteilung: **04.06.2003**
(21) Anmeldenummer: 98112017.3
(22) Anmeldetag: 30.06.1998
(51) Int. Cl.: B60T 7/12

(54) **Vorrichtung und Verfahren zur Verkürzung des Bremsweges**
Device and procedure for shortening the brake distance
Dispositif et procédé pour raccourcir la distance de freinage

(30) Priorität: 31.07.1997 DE 19733190
(43) Veröffentlichungstag der Anmeldung: 03.02.1999
(73) Patentinhaber: Dr.Ing.h.c. F. Porsche Aktiengesellschaft, 70435 Stuttgart (DE)
(72) Erfinder: Martin, Roland, 71287 Weissach (DE); Görich, Hans-Jürgen, Dr., 74372 Sersheim (DE); Aden, Alfred, 71287 Weissach (DE)

(56) Entgegenhaltungen:
- EP-A- 0 819 591
- WO-A-95/01898
- DE-C- 4 028 290
- DE-C- 4 329 140
- DE-C- 4 338 067

## Beschreibung

Die Erfindung betrifft eine Vorrichtung und ein Verfahren zur Verkürzung des Bremsweges bei Fahrzeugen nach dem Oberbegriff der unabhängigen Patentansprüche.

Die Erfindung geht aus von einer Vorrichtung zum Bremsen, wie sie aus der EP 0 706 466 A1 bekannt geworden ist. Zur Auslösung eines automatischen Bremsvorganges wird zunächst überprüft, ob die Betätigungsgeschwindigkeit des Fahrpedales im Sinne einer Zurücknahme des Fahrpedales einen ersten Grenzwert überschreitet. Zusätzlich wird geprüft, ob der Fahrer den Fuß vom Fahrpedal nimmt. Alternativ wird geprüft, ob der Fahrer seinen Fuß vom Fahrpedal zum Bremspedal bewegt. Sind die erste Bedingung und die zweite oder die dritte Bedingung erfüllt, so wird ein automatischer Bremsvorgang ausgelöst. Der automatische Bremsvorgang wird beendet, sobald das Bremspedal oder das Fahrpedal betätigt werden. Nach einer alternativen Ausführung wird der automatische Bremsvorgang nach Ablauf einer eingestellten Zeitdauer (0,3 bis 1,2 sec, vorzugsweise 0,5 sec) beendet. Mit dieser Vorrichtung zum Bremsen behält der Fahrer während einer Bremsung jederzeit die Kontrolle über den Bremsvorgang, da der automatische Bremsvorgang unterbrochen wird, sobald das Bremspedal betätigt ist. Andererseits fällt jedoch bei üblicher, nämlich progressiv ansteigender Betätigung des Bremspedales der Bremsdruck zu Beginn des vom Fahrer eingeleiteten Bremsvorganges zunächst ab, so daß der Bremsweg verlängert ist.

Aus der DE 40 28 290 C1 ist ein Verfahren zur Verkürzung des Bremsweges in kritischen Fahrsituationen bekannt geworden, mit dem ebenfalls ein automatischer Bremsvorgang ausgelöst werden kann. Dort wird vorgeschlagen, auf ein Überschreiten des ersten Schwellwertes für die Betätigungsgeschwindigkeit des Bremspedales hin einen automatischen Bremsvorgang auszulösen. Der hierbei automatisch aufgebaute Bremsdruck entspricht dem Bremsdruck bei optimaler Verzögerung des Fahrzeuges. Wird im Verlaufe dieses automatischen Bremsvorganges festgestellt, ob die Betätigungsgeschwindigkeit des Bremspedales unter den Wert Null fällt, d.h. das Bremspedal zurückgenommen wird. In diesem Falle wird der maximale Bremsdruck auf eine der Bremspedalstellung entsprechende Größenordnung abgebaut. Bei diesem Verfahren wird ein automatischer Bremsvorgang auch dann ausgelöst, wenn das Bremspedal anfänglich schnell durchgetreten wird. Dadurch kann es auch in Fahrsituationen, in denen der Fahrer lediglich eine rasche, gezielte Bremsung einleiten will, zu einer Vollbremsung kommen.

Gegenüber diesem Stand der Technik ist es Aufgabe der Erfindung, eine Vorrichtung und ein Verfahren zur Verkürzung des Bremsweges zu schaffen, bei der Gesamt-Bremsvorgang verbessert ist.

Diese Aufgabe wird erfindungsgemäß mit den Merkmalen der unabhängigen Patentansprüche gelöst. Es wird vorgeschlagen, daß die Betätigung der Bremseinrichtung durch die Betätigungsvorrichtung nur für einen begrenzten Zeitraum erfolgt. In vorteilhafter Weise ist durch die Auslösung eines automatischen Bremsvorganges bei schneller Rücknahme des Fahrpedales eine frühzeitige Auslösung des automatischen Bremsvorganges und damit eine Verkürzung des Bremsweges gewährleistet. Dadurch, daß dieser automatischer Bremsvorgang auf einen vorgegebenen Zeitraum begrenzt ist, ist andererseits sichergestellt, daß in Fällen, in denen keine Notsituation vorliegt und deshalb nach einer schnellen Rücknahme des Gaspedales keine Betätigung des Bremspedales folgt, über ein kurzes Anbremsen hinaus die Führung des Fahrzeuges nicht beeinträchtigt oder gar eine gefährliche Fahrsituation erzeugt wird. Dabei ist der Zeitraum für die automatische Betätigung der Bremseinrichtung durch die Betätigungseinrichtung so gewählt, daß ein Maximum der automatischen Betätigung mit einer Betätigung der Bremseinrichtung durch den Fahrer in einer Notsituation zusammenfällt. Durch diese Maßnahme ist sichergestellt, daß der automatische Bremsvorgang und der vom Fahrer neben einer Notsituation durchgeführte Bremsvorgang übergangslos aufeinanderfolgen, so daß auch hiermit der Bremsvorgang verbessert und der Bremsweg verkürzt wird.

In den Unteransprüchen sind vorteilhafte Weiterbildungen der Erfindung dargestellt.

Vorzugsweise wird der Zeitraum der automatischen Betätigung der Bremseinrichtung im Bereich von 0,3 bis 0,5 sec. gewählt und das Maximum der automatischen Betätigung so eingestellt, daß zwischen 50% und 75% der maximalen Betätigungskraft der Bremseinrichtung erreicht werden. Die Betätigungsform der automatischen Betätigung der Bremseinrichtung ist fahrzeugspezifisch abzustimmen; neben einem sinusförmigen Verlauf ist auch ein trapez- oder rechteckförmiger Verlauf möglich.

Es wird ferner vorgeschlagen, eine zweite Vergleichseinrichtung vorzusehen, die ein zweites Signal abgibt, wenn sich das Fahrpedal im wesentlichen in seiner Nulllage befindet. Eine automatische Betätigung der Bremseinrichtung durch die Betätigungsvorrichtung soll nun nur dann stattfinden, wenn sowohl das erste Signal als auch das zweite Signal anliegt, mit anderen Worten, wenn das Fahrpedal rasch in seine Ruhelage zurückgeführt wird bzw. der Fahrer den Fuß rasch vom Fahrpedal nimmt. Anstelle der zweiten Vergleichseinrichtung kann auch ein Geber vorgesehen sein, der ein Signal abgibt, wenn sich das Fahrpedal in seiner Ruhelage befindet.

Weiterhin kann es vorgesehen sein, eine dritte Vergleichseinrichtung einzusetzen, die ein drittes Signal erzeugt, wenn bei der Betätigung des Bremspedales ein dritter Grenzwert für die Betätigungsgeschwindigkeit im Betätigungssinne überschritten wird. Auf dieses dritte Signal hin soll die Betätigungsvorrichtung die Bremseinrichtung dann unabhängig von der Stellung des Bremspedales automatisch betätigen, wenn das dritte Signal während einer durch das erste und zweite Signal ausgelösten automatischen Betätigung der Bremseinrichtung, die zeitlich begrenzt ist, anliegt. Vorzugsweise soll diese Betätigung nunmehr mit maximaler Betätigungskraft erfolgen. Somit schließt sich nunmehr an die erste automatische Betätigung der Bremseinrichtung für einen begrenzten Zeitraum eine zweite, zunächst unbegrenzte automatische Betätigung der Bremseinrichtung an, wenn während der ersten automatischen Betätigung das dritte Signal auftritt. Dadurch daß die zweite automatische Betätigung der Bremseinrichtung von einer Betätigung des Bremspedales durch den Fahrer abhängig ist, ist sichergestellt, daß die fortwährende automatische Betätigung der Bremseinrichtung nur tatsächlichen Notsituationen erfolgt. In vorteilhafter Weise wird hierbei nur dann ein automatischer Bremsvorgang, der unabhängig von der Stellung des Bremspedales ist, aufgelöst, wenn der Fahrer zunächst das Fahrpedal rasch zurücknimmt und nachfolgend das Bremspedal rasch betätigt. Der Erfindung liegt dabei die Erkenntnis zugrunde, daß kritischen Fahrsituationen regelmäßig ein normaler Fahrbetrieb, d.h. mit betätigtem Fahrpedal vorausgeht.

Weiterhin wird vorgeschlagen, eine vierte Vergleichseinrichtung vorzusehen, die dann ein viertes Signal abgibt, wenn das Bremspedal mit einer Betätigungsgeschwindigkeit, die oberhalb eines vierten Grenzwertes liegt, zurückgenommen wird. Auf dieses vierte Signal hin betätigt die Betätigungsvorrichtung die Bremseinrichtung nun abhängig von der Stellung des Bremspedales, d.h. bei einer Rücknahme des Bremspedales wird auch der Bremsdruck vermindert. Durch diese Maßnahme ist sichergestellt, daß nach dem Einleiten eines automatischen Bremsvorganges der Fahrer die Kontrolle über den Bremsvorgang übernehmen kann, indem er das Bremspedal rasch zurücknimmt. Da in diesem Falle nicht der der Stellung des Bremspedales entsprechende Bremsdruck, sondern ausgehend von dem eingestellten Bremsdruck ein der Stellung des Bremspedales proportionaler Bremsdruck eingestellt wird, ist sichergestellt, daß der Bremsdruck bei einer solchen Zurücknahme des Bremspedales nicht schlagartig abfällt.

Zusätzlich wird vorgeschlagen, eine fünfte Vergleichseinrichtung vorzusehen, der ein fünftes Signal abgibt, wenn das Bremspedal nicht mehr betätigt ist. Auf dieses fünfte Signal hin soll die Betätigungsvorrichtung für die Bremseinrichtung unbedingt abgeschaltet werden. Durch diese Maßnahme ist in vorteilhafter Weise sichergestellt, daß der Fahrer den automatischen Bremsvorgang jederzeit dadurch abbrechen kann, daß er das Bremspedal in seiner Ausgangsstellung bringt. Dies gilt unbedingt, d.h. unabhängig vom Zustand des automatischen Bremsvorganges. Anstelle der fünften Vergleichseinrichtung kann auch ein Geber vorgesehen sein, der ein Signal abgibt, wenn sich das Bremspedal in siner Ruhelage befindet.

Nach einer weiteren Ausbildung der Erfindung ist es vorgesehen, den automatischen Bremsvorgang nach seiner Auslösung zunächst für einen Zeitraum von ca. 0,5 sec. fortzusetzen. Dies soll auch dann gelten, wenn, wie vorstehend beschrieben, das dritte Signal anliegt und der Bremsdruck demgemäß eigentlich vermindert werden sollte. Diese Ausbildung der Erfindung liegt die Erkenntnis zugrunde, daß ein normaler Fahrer, der in kritischen Fahrsituationen eine Bremsung reflexartig auslöst, im Bereich der ersten 0,5 sec. des Bremsvorganges zunächst eine Reflexsituation zeigt und erst nach diesem Zeitraum eine bewußte Betätigung des Bremspedales einsetzt. Diese Reflexreaktion beinhaltet in aller Regel auch ein kurzfristiges, rasches Lösen des Bremspedales als Reaktion auf die einsetzende Verzögerung. Mit der vorstehend beschriebenen Ausbildung der Erfindung ist nunmehr vermieden, daß eine derartige Reflexreaktion zu einem Abbruch des automatischen Bremsvorganges führt.

Der weitere Ablauf des automatischen Bremsvorganges, insbesondere die Wahl des einzustellenden Bremsdruckes, sind nicht Gegenstand der vorliegenden Erfindung und können beispielsweise in Anlehnung an das in der DE 40 28 290 C1 dargestellte Verfahren durchgeführt werden.

Die Erfindung ist nachstehend anhand des in den Figuren dargestellten Ausführungsbeispieles näher beschrieben.

Es zeigen
- Fig. 1: eine schematische Systemübersicht,
- Fig. 2: ein Blockschaltbild einer erfindungsgemäßen Vorrichtung,
- Fig. 3: ein Ablaufdiagramm eines erfindungsgemäßen Verfahrens,
- Fig. 4: ein Diagramm einer typischen Betätigungscharakteristik einer Bremseinrichtung in Notbremssituationen und
- Fig. 5: ein Diagramm einer nach der Erfindung ausgelösten Betätigung der Bremseinrichtung in Notbremssituationen.

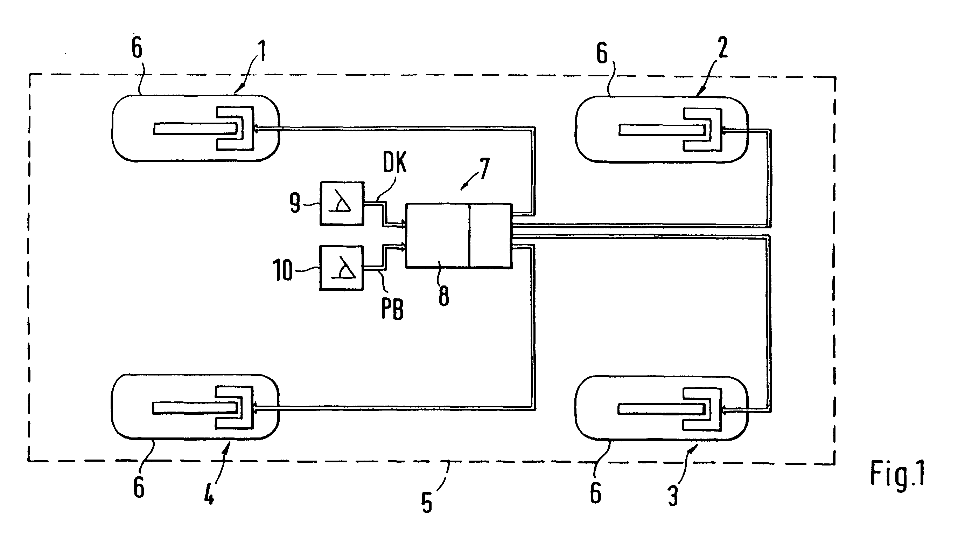

In der schematischen Systemübersicht nach Fig. 1 ist ein Fahrzeug 5 angedeutet, dessen Räder 6 mit hydraulisch betätigten Bremseinrichtungen 1 bis 4 abbremsbar sind. Die Bremseinrichtungen 1 bis 4 werden von einer Betätigungsvorrichtung 7 betätigt, indem diese die Bremsen 1 bis 4 individuell mit Bremsdrücken Pi, i=1..4 beaufschlagt. In die Betätigungseinrichtung 7 ist eine Steuerungseinrichtung 8 integriert. Ein vom Fahrer betätigtes Fahrpedal 9 folgt ein Signal DK und ein ebenfalls vom Fahrer betätigtes Bremspedal 10 ein Signal PB.

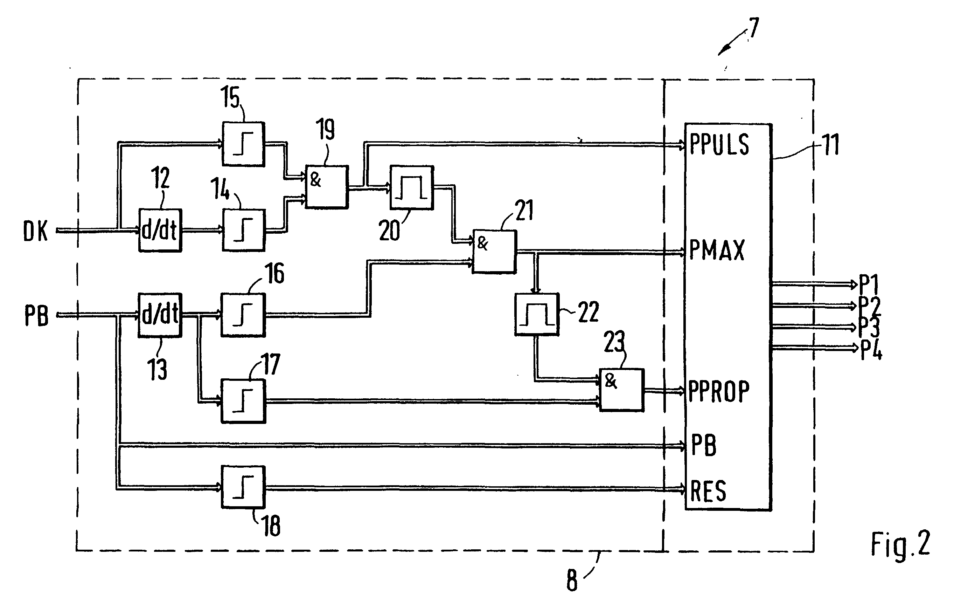

In Fig. 2 ist in Form eines Blockschaltbildes die Betätigungseinrichtung 7 näher dargestellt. Neben der Steuerungseinrichtung 8 ist in der Betätigungsvorrichtung 7 eine Drucksteuereinrichtung 11 vorgesehen, die die Bremsdrücke Pi erzeugt. Die Drucksteuereinrichtung 11 ist von einer an sich bekannten Drucksteuereinrichtung eines Antiblockier-Bremssystemes abgeleitet und in der Lage, jedes der Räder 6 individuell abzubremsen. In Versuchsfahrten. vorzugsweise jedoch adaptiv während des laufenden Fahrbetriebes, ermittelt die Drucksteuereinrichtung 11 für jedes Rad 6 den Bremsdruck Pi, bei dem eine maximale Bremswirkung bei Betätigung aller vier Bremsen 1 bis 4 erzielbar ist, ohne daß eines der Räder 1 bis 4 blockiert.

Die für die Antiblockierfunktion notwendigen Steuereingänge sind nicht näher dargestellt; zusätzlich zu diesen Steuereingängen sind an der Drucksteuereinrichtung 11 die Steuereingänge PPULS, PMAX, PPROP, PB und RES vorgesehen. Auf ein Signal am Eingang PPULS hin erzeugt die Drucksteuereinrichtung 11 Bremsdrücke Pi in Form in Form eines Bremsimpulses für einen Zeitraum von 0,4 sec. Der Bremsimpuls weist die Form eines abgespeicherten Profiles auf, das in seinem Maximurn ca. 70% der maximalen Bremswirkung erreicht. Auf ein Signal am Eingang PMAX hin erzeugt die Drucksteuereinrichtung 11 Bremsdrücke Pi für eine maximale Bremswirkung. Liegt am Eingang PPROP ein Signal an, so werden die Bremsdrücke Pi von der Drucksteuereinrichtung 11 proportional zur Änderung des von dem Bremspedal 10 erzeugten Signales PB hin eingestellt; das Signal PPROP hat dabei Vorrang vor den Signalen PMAX und PPULS. Der Eingang PB erhält vom Bremspedal 10 das Signal PB. Ein Signal am Eingang RES schließlich beendet unbedingt einen automatischen Bremsvorgang, der durch ein Signal an einem der Eingänge PPULS, PMAX oder PPROP an der Drucksteuereinrichtung 11 ausgelöst wurde.

In der Steuereinrichtung 8 sind zur Aufbereitung der Eingangssignale DK und PB zunächst zwei Differenzierer 12 und 13 vorgesehen. Eine erste Vergleichseinrichtung 14 erhält das Ausgangssignal dDK/dt des ersten Differenzierers 12 und vergleicht es mit einem ersten Grenzwert LDK. Wird der Grenzwert LDK überschritten, so gibt die erste Vergleichseinrichtung 14 ein Signal ab. Eine zweite Vergleichseinrichtung 15 erhält direkt das Signal DK und gibt ein Signal ab, wenn das Signal DK im wesentlichen Null ist. Eine dritte Vergleichseinrichtung 16 vergleicht das Ausgangssignal dPB/dt des zweiten Differenzierers 13 mit einem Grenzwert LPB1 und gibt ein Signal ab, wenn der Grenzwert LPB1 überschritten wird. Eine vierte Vergleichseinrichtung 17 prüft, ob das Ausgangssignal dPB/dt des zweiten Differenzierers 13 einen Grenzwert LPB2 unterschreitet und gibt dann ein Signal ab. Eine fünfte Vergleichseinrichtung 18 schließlich erhält direkt das Signal PB und gibt dann ein Signal ab, wenn das Signal PB im wesentlichen Null ist.

Ein erstes UND-Glied 19 verknüpft die Signale der ersten Vergleichseinrichtung 14 und der zweiten Vergleichseinrichtung 15. Das Ausgangssignal des UND-Gliedes 19 ist auf den Eingang PPULS der Drucksteuereinrichtung 11 geführt. Darüber hinaus wird das Ausgangssignal des UND-Gliedes 19 einem Impulsformer 20 zugeführt, der einen Impuls von 0,4 sec Dauer erzeugt. Die Länge dieses Impulses entspricht der Länge des Bremsimpulses, der von der Drucksteuereinrichtung 11 bei einem Signal am Eingang PPULS erzeugt wird. Ein zweites UND-Glied 21 verknüpft das Signal des Impulsformers 20 mit dem Ausgangssignal der dritten Vergleichseinrichtung 16. Das Ausgangssignal des zweiten UND-Gliedes 21 ist auf den Eingang PMAX der Drucksteuereinrichtung 11 geführt. Parallel hierzu wird das Ausgangssignal des zweiten UND-Gliedes 21 einem zweiten Impulsformer 22 zugeführt, der hieraus einen Impuls von 0,2 sec Dauer erzeugt. Das Ausgangssignal des zweiten Impulsformers 22 ist auf einen invertierenden Eingang eines dritten UND-Gliedes 23 geführt. Der zweite, nicht invertierende Eingang des dritten UND-Gliedes 23 erhält das Ausgangssignal der vierten Vergleichseinrichtung 17. Das Ausgangssignal des dritten UND-Gliedes 23 ist auf den Eingang PPROP der Drucksteuereinrichtung 11 geführt. Schließlich ist das Ausgangssignal der fünften Vergleichseinrichtung 18 auf den Eingang RES der Drucksteuereinrichtung 11 geführt.

Die vorstehend beschriebene Steuereinrichtung 8 wirkt wie folgt: Mittels der zweiten Vergleichseinrichtung 14 wird geprüft, ob das Fahrpedal 9 schnell zurückgenommen wird. Stellt gleichzeitig die erste Vergleichseinrichtung 15 fest, daß das Fahrpedal 9 im wesentlichen seine Ruhelage erreicht hat, so gibt das erste UND-Glied 19 ein Signal auf den Eingang PPULS der Drucksteuereinrichtung 11 und löst damit einen automatischen Bremsimpuls von 0,4 sec Dauer aus. Parallel hierzu wird aus dem Ausgangssignal des ersten UND-Gliedes 19 mit Hilfe des Impulsformers 20 ein Impuls von derselben Dauer wie der zuvor ausgelöste automatische Bremsimpuls erzeugt.

Wenn während der Dauer dieses Impulses das Bremspedal 10 rasch betätigt wird, so gibt die dritte Vergleichseinrichtung 16 ein Signal ab. Das zweite UND-Glied 21 gibt nun seinerseits ein Signal auf den Eingang PMAX der Drucksteuereinrichtung 11 und löst so einen automatischen Bremsvorgang mit maximaler Bremsbetätigung aus. Das Ausgangssignal des zweiten UND-Gliedes 21 wird gleichzeitig auf den zweiten Impulsformer 22 geführt. Der zweite Impulsformer 22 erzeugt daraufhin ein impulsförmiges Signal von 0,2 sec Dauer, das über einen invertierenden Eingang auf das dritte UND-Glied 23 geführt ist. Der zweite, nicht invertierende Eingang des dritten UND-Gliedes 23 erhält das Ausgangssignal der vierten Vergleichseinrichtung 17, die prüft, ob die Betätigungsgeschwindigkeit des Bremspedales 10 kleiner als der (negative) Grenzwert LPB2 ist, d.h. das Bremspedal 10 rasch zurückgenommen wird. Mit dieser Verknüpfung sperrt das impulsförmige Signal des zweiten Impulsformers 22 für 0,2 sec nach einer raschen Betätigung des Bremspedales 10 die Weiterleitung des Ausgangssignales der vierten Vergleichseinrichtung 17 auf den Eingang PPROP der Drucksteuereinrichtung 11.

Nach Ablauf des Zeitraumes von 0,2 sec nach einer raschen Betätigung des Bremspedales 10 wird das Ausgangssignal der vierten Vergleichseinrichtung 17 auf den Eingang PPROP der Drucksteuereinrichtung 11 weitergeleitet, so daß bei einer raschen Rücknahme des Bremspedales 10 ein zuvor ausgelöster automatischer Bremsvorgang mit maximaler Bremswirkung dadurch beeinflußt wird, daß nun abhängig von der Änderung der Stellung des Bremspedales 10 auch die Ansteuerung der Bremsen 1 bis 4 über die Drucksignale Pi verändert wird. Diese Beeinflussung des automatischen Bremsvorganges erfolgt proportional der Stellung des Bremspedales 10, wobei der Proportionalitätsfaktor beispielsweise so gewählt sein kann, daß eine Rücknahme des Bremspedales 10 um 50% der aktuellen Position auch die Bremswirkung um 50% reduziert.

Die fünfte Vergleichseinrichtung 18 schließlich prüft, ob sich das Bremspedal 10 im wesentlichen in seiner Ruhestellung befindet, d.h. entlastet ist. Ist dies der Fall, so wird der automatische Bremsvorgang durch ein Signal auf den Eingang RES der Drucksteuereinrichtung 11 unbedingt abgebrochen.

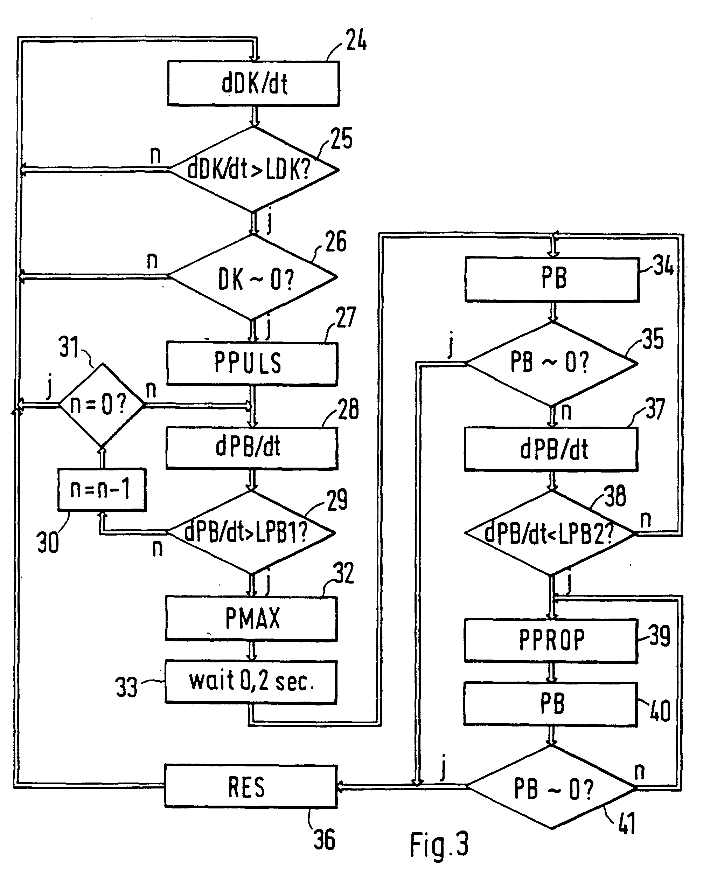

Anstelle der ersten Vergleichseinrichtung 15 bzw. der fünften Vergleichseinrichtung 18, die jeweils prüfen, ob das Fahrpedal 9 bzw. das Bremspedal 10 seine Ruheposition erreicht hat, können in gleicher Weise auch andere Geber vorgesehen sein, mit denen die Ruheposition der jeweiligen Pedale zu bestimmen ist. Die Steuereinrichtung 8 kann alternativ zu dem in Fig. 2 mit Hilfe von diskreten Logikelementen dargestellten Ausführungsbeispiel alternativ auch als mikroprozessorgesteuerte Steuerung ausgeführt sein (nicht näher dargestellt). In diesem Fall ist in einem Speicher ein Ablaufprogramm vorgesehen, das nachfolgend anhand des in Fig. 3 dargestellten Ablaufdiagrammes näher beschrieben ist.

In einem ersten Schritt 24 wird das Signal DK eingelesen und differenziert, so daß ein Signal dDK/dt zur Verfügung steht. Im nächsten Schritt 25 wird dann geprüft, ob das differenzierte Signal dDK/dt einen Grenzwert LDK überschreitet. Ist dies der Fall, so wird zum nächsten Schritt 26 verzweigt; anderenfalls erfolgt ein Rücksprung zum ersten Schritt 24. In Schritt 26 wird dann geprüft, ob der Wert des Signales DK im wesentlichen Null ist. Ist diese Bedingung erfüllt, so wird zum nächsten Schritt 27 verzweigt; anderenfalls erfolgt ein Rücksprung zum ersten Schritt 24. In Schritt 27 wird ein Signal auf den Eingang PPULS der Drucksteuereinrichtung 11 gegeben. Daraufhin wird, wie oben beschrieben, von der Drucksteuereinrichtung 11 ein Bremsimpuls automatisch erzeugt.

Im darauffolgenden Schritt 28 wird das Signal PB differenziert und als Ergebnis das Signal dPB/dt gebildet. In Schritt 29 wird geprüft, ob das differenzierte Signal dPB/dt einen Grenzwert LPB1 überschreitet. Ist dies nicht der Fall, so wird in einem Schritt 30 ein Zähler n um den Wert 1 vermindert. Dieser Zähler n wurde zuvor zu einem vor dem Schritt 28 liegenden Verfahrensschritt auf einen Wert gesetzt, der so gewählt ist, daß die aus den Programmschritten 28 bis 31 bestehende Programmschleife im Schritt 31 nach einer Zeitdauer verlassen wird, die der Dauer des in Schritt 27 ausgelösten automatischen Bremsimpulses entspricht, hier 0,4 sec.

In Schritt 31 wird geprüft, ob der Zähler n den Wert Null erreicht hat. Ist dies nicht der Fall, so verzweigt das Programm wieder zu Schritt 28, während es anderenfalls zum ersten Schritt 24 zurückkehrt.

Ist das Ergebnis des Vergleiches in Schritt 29 hingegen positiv, so wird das Programm mit Schritt 32 fortgesetzt, indem über den Eingang PMAX einer Drucksteuereinrichtung 11 ein Bremsvorgang mit maximaler Bremswirkung ausgelöst wird. Im nachfolgenden Schritt 33 wird der weitere Programmablauf für 0,2 sec unterbrochen. Danach wird in Schritt 34 das Signal PB eingelesen und in Schritt 35 geprüft, ob der Wert des Signales PB im wesentlichen Null ist. Ist dies der Fall, so wird im Schritt 36 ein Signal an den Eingang RES der Drucksteuereinrichtung 11 ausgegeben und der automatische Bremsvorgang danach beendet, bevor ein Rücksprung zum ersten Schritt 24 erfolgt. Bleibt der Vergleich in Schritt 35 negativ, so wird im nachfolgenden Schritt 36 durch differenzieren das Signal dPB/dt gebildet. In Schritt 38 wird dann verglichen, ob das differenzierte Signal dPB/dt den (negativen) Grenzwert LPB2 unterschreitet. Ist dies nicht der Fall, so erfolgt ein Rücksprung zu Schritt 34 und es wird eine Programmschleife bestehend aus den Programmschritten 34 bsi 38 gebildet. Diese Programmschleife wird verlassen, wenn der Vergleich in Schritt 38 positiv ausfällt. In Schritt 39 wird daraufhin ein Signal auf den Eingang PPROP der Drucksteuereinrichtung 11 gegeben, so daß im folgenden die Bremswirkung proportional zum Signal PB eingestellt wird. Die nachfolgenden Schritte 40 und 41 entsprechen den Schritten 34 und 35, so daß das Programm beendet und der automatische Bremsvorgang abgebrochen wird, wenn das Signal PB im wesentlichen den Wert Null erreicht.

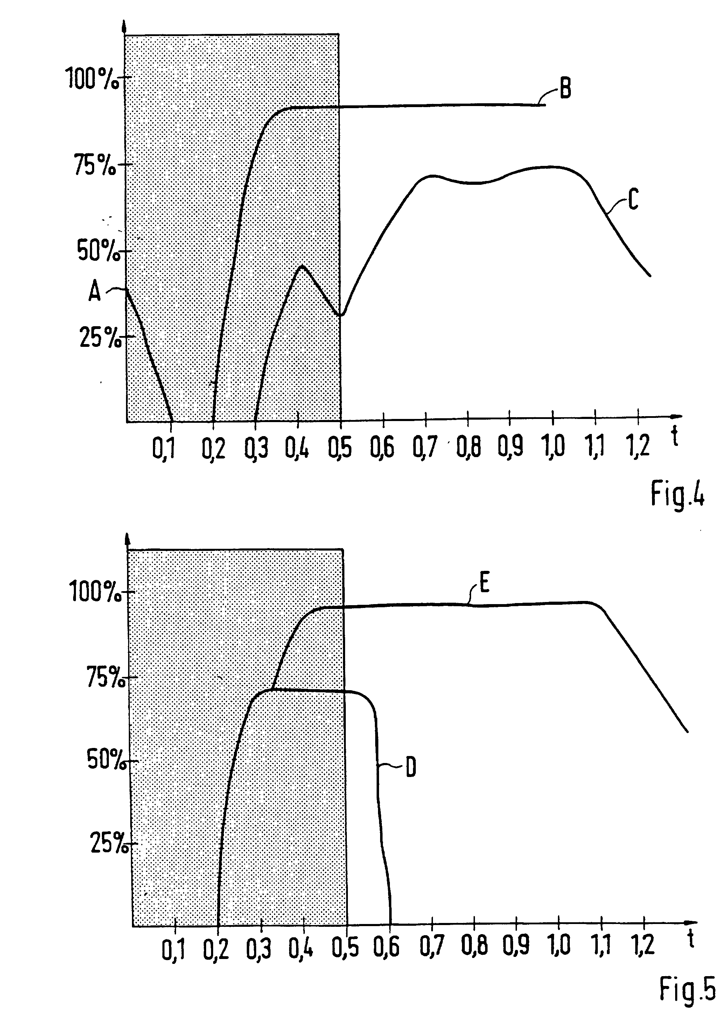

In Fig. 4 sind anhand eines Diagrammes die typischen Betätigungsverläufe in Notsituationen für ein Fahrpedal 9 (Kurve A), für ein Bremspedal durch einen trainierten Fahrer (Kurve B) und für ein Bremspedal 10 durch einen Normalfahrer (Kurve C) dargestellt. Aufgetragen ist der Betätigunsweg über der Zeit. Zum Zeitpunkt t = 0 sec erkennt der Fahrer eine Notsituation und nimmt das Fahrpedal 9 rasch zurück, wie dies in der Kurve A dargestellt ist. Der trainierte Fahrer betätigt zum Zeitpunkt t = 0,2 sec das Bremspedal 10 gemäß der Kurve B und baut innerhalb kurzer Zeit einen so hohen Bremsdruck auf, daß eine maximale Bremswirkung erzielt wird. Der normale Fahrer hingegen betätigt das Bremspedal 10 erst zum Zeitpunkt t = 0,3 sec und bringt einen mäßigen Bremsdruck auf. Zum Zeitpunkt t = 0,4 sec nimmt er das Bremspedal 10 kurzfristig zurück und vermindert dadurch den Bremsdruck. Ab dem Zeitpunkt t = 0,5 sec steigt der Bremsdruck wieder an und erreicht schließlich einen mittelhohen Wert.

Wie Untersuchungen ergeben haben, findet innerhalb der ersten 0,5 sec nach Erkennen der Notsituation eine Reflexreaktion statt. Bei trainierten Fahrern führt dies, wie Kurve B zeigt, zu einem raschen Einleiten einer Bremsung mit hoher Wirkung. Bei einem normalen Fahrer hingegen führt dies zu einem mäßigen Anbremsen verbunden mit einer kurzfristigen Rücknahme des Bremspedales 10 und damit der Bremswirkung, siehe Kurve C.

In Fig. 5 ist ebenfalls anhand eines Diagrammes die Wirkung der Betätigungseinrichtung 7 für eine Betätigung des Bremspedales gemäß der Kurve C in der Fig. 4 näher dargestellt. Aufgetragen ist das Niveau der Bremsdrücke Pi bezogen auf die maximalen Bremsdrücke über der Zeit. Zum Zeitpunkt t = 0,1 sec ist das Fahrpedal 9 rasch in seine Ruheposition zurückgenommen, so daß die in den ersten beiden Vergleichseinrichtungen 14, 15 (vgl. Fig. 2) geprüften Bedingungen erfüllt sind. Die Drucksteuereinrichtung 11 löst daher zum Zeitpunkt t = 0,2 sec einen Bremsimpuls gemäß der Kurve D aus. Die Verzögerungszeit zwischen der vollständigen Rücknahme des Fahrpedales 9 und dem Beginn der Kurve D ist darauf zurückzuführen, daß bei der Betätigung der Bremsen 1 bis 4 durch die Drucksteuereinrichtung 11 eine gewisse Verzögerung durch den Aufbau der Bremsdrücke Pi auftritt. Der automatische Bremsimpuls gemäß der Kurve D erreicht im Maximum ca. 70% des maximalen Bremsdruckes für eine blockierfreie Bremsung und dauert 0,4 sec an.

Zum Zeitpunkt t = 0,3 sec wird gemäß Kurve C das Bremspedal 10 rasch betätigt und die dritte Vergleichseinrichtung 16 (vgl. Fig. 2) gibt ein Signal ab. Da der zuvor ausgelöste Bremsimpuls noch andauert, löst dieses Signal über das zweite UND-Glied 21 am Eingang PMAX der Drucksteuereinrichtung 11 einen automatischer Bremsvorgang gemäß der Kurve E aus. Zum Zeitpunkt t = 0,3 sec sind die Bremsen 1 bis 4 bereits mit Bremsdrücken Pi beaufschlagt, so daß nun der weitere Druckaufbau ohne die vorgenannte Verzögerungszeit rasch erfolgen kann. Dieser automatische Bremsvorgang ist nicht durch eine vorgegeben Zeitdauer begrenzt.

Durch den zweiten Impulsformer 22 sowie das dritte UND-Glied 23 wird verhindert, daß die Rücknahme des Bremspedales 10 (Kurve C, 0,4 bis 0,5 sec) während der Reflexreaktion zu einer Rücknahme der maximalen Bremswirkung gemäß der Kurve E führt. Aus diesem Grunde wurde die Dauer des vom zweiten Impulsformer 22 erzeugten Impulses so gewählt, daß dieser Impuls bis zum Ende der Reflexreaktion reicht. Im vorliegenden Beispiel ergibt sich damit eine Dauer des Impulses von 0,5 sec (Reflexreaktion) - 0,3 sec (Betätigung Bremspedal 10) = 0,2 sec.

Auch ein weiterer Anstieg der Betätigungskraft (Kurve C, 0,5 bis 0,7 sec) oder leichte Schwankungen in der Betätigungskraft (Kurve C, 0,8 bis 0,9 sec) führen nicht zu einer Rücknahme der maximalen Betätigungskraft gemäß der Kurve E. Erst eine rasche Rücknahme des Bremspedales 10 (Kurve C, 1,1 sec) führt dazu, daß das Niveau der Bremsdrücke Pi gemäß der Kurve E abfällt.

## Patentansprüche

1. Vorrichtung zur Verkürzung des Bremsweges bei Fahrzeugen mit einer ersten Vergleichseinrichtung (14), die ein erstes Signal abgibt, wenn die Betätigungsgeschwindigkeit eines Fahrpedales (9) einen ersten Grenzwert (LDK) im Sinne einer Rücknahme des Fahrpedales überschreitet, und einer Betätigungsvorrichtung (7) für eine Bremseinrichtung (1,2,3,4) des Fahrzeuges, wobei die Betätigungsvorrichtung die Bremseinrichtung abhängig von dem ersten Signal betätigt, wobei die Betätigung der Bremseinrichtung durch die Betätigungsvorrichtung (7) für einen begrenzten Zeitraum erfolgt, **dadurch gekennzeichnet, daß** der Zeitraum einer maximalen Betätigung der Bremseinrichtung (1,2,3,4) durch die Betätigungsvorrichtung (7) so gewählt ist, daß er einen Zeitpunkt umfasst, zu dem die Bremseinrichtung durch einen üblichen Fahrer in einer Notsituation reflexartig betätigt wird.

2. Vorrichtung nach Anspruch 1, **dadurch gekennzeichnet, daß** der Zeitraum der Betätigung der Bremseinrichtung (1,2,3,4) im Bereich von 0,3 sec bis 0,5 sec liegt und ein Maximum der Betätigung im Bereich von 50% bis 75% der maximalen Betätigung der Bremseinrichtung gewählt ist.

3. Vorrichtung nach Anspruch 1 oder 2, **dadurch gekennzeichnet, daß** eine zweite Vergleichseinrichtung (15) oder ein erster Geber vorgesehen ist, der ein zweites Signal abgibt, wenn sich das Fahrpedal (9) im wesentlichen in seinen Nullage befindet, wobei die Betätigungsvorrichtung (7) die Bremseinrichtung betätigt, wenn sowohl das erste Signal als auch das zweite Signal anliegt.

4. Vorrichtung nach Anspruch 1, 2 oder 3, **dadurch gekennzeichnet, daß** eine dritte Vergleichseinrichtung (16) vorgesehen ist, die ein drittes Signal abgibt, wenn die Betätigungsgeschwindigkeit des Bremspedales (10) einen dritten Grenzwert (LPB1) im Betätigungssinne des Bremspedales überschreitet, wobei die Betätigungsvorrichtung (7) die Bremseinrichtung (1,2,3,4) unabhängig von der Stellung des Bremspedales betätigt:, wenn während der zeitlich begrenzten Betätigung der Bremseinrichtung das dritte Signal anliegt.

5. Vorrichtung nach einem der vorstehenden Ansprüche, **dadurch gekennzeichnet, daß** eine vierte Vergleichseinrichtung vorgesehen (17) ist, die ein viertes Signal abgibt, wenn die Betätigungsgeschwindigkeit des Bremspedales (10) einen vierten Grenzwert (LPB2) im im Sinne einer Rücknahme des Bremspedales überschreitet und die Betätigungsvorrichtung die Bremseinrichtung (1,2,3,4) abhängig von der Stellung des Bremspedales betätigt, wenn das vierte Signal anliegt.

6. Vorrichtung nach einem der vorstehenden Ansprüche, **dadurch gekennzeichnet, daß** eine fünfte Vergleichseinrichtung (18). oder ein zweiter Geber vorgesehen ist, der ein fünftes Signal abgibt, wenn sich das Bremspedal (10) im wesentlichen in seinen Nullage befindet, und wobei die Betätigungsvorrichtung (10) unbedingt abgeschaltet wird, wenn das fünfte Signal anliegt.

7. Vorrichtung nach Anspruch 4, **dadurch gekennzeichnet, daß** die Betätigungsvorrichtung (7) die Bremseinrichtung (1,2,3,4) unabhängig von der Stellung des Bremspedales (10) zumindest für einen Zeitraum im Bereich von 0,1 bis 0,4 sec betätigt, wenn das dritte Signal anliegt.

8. Verfahren zur Verkürzung des Bremsweges bei Fahrzeugen mit folgenden Schritten:
a) Vergleichen einer Betätigungsgeschwindigkeit eines Fahrpedales (9) mit einen ersten Grenzwert (LDK) im Sinne einer Rücknahme des Fahrpedales,
b) Betätigen einer Bremseinrichtung (1,2,3,4) des Fahrzeuges, wenn der erste Grenzwert überschritten wird,
b) Betätigen einer Bremseinrichtung (1,2,3,4) des Fahrzeuges für einen begrenzten Zeitraum, wenn der erste Grenzwert überschritten wird,
**dadurch gekennzeichnet, daß** der Zeitraum einer maximalen Betätigung der Bremseinrichtung (1,2,3,4) durch die Betätigungsvorrichtung (7) so gewählt ist, daß er einen Zeitpunkt umfasst, zu dem die Bremseinrichtung durch einen üblichen Fahrer in einer Notsituation reflexartig betätigt wird.

9. Verfahren nach Anspruch 8, **dadurch gekennzeichnet, daß** der Zeitraum der Betätigung der Bremseinrichtung (1,2,3,4) im Bereich von 0,3 sec bis 0,5 sec liegt und ein Maximum der Betätigung im Bereich von 50% bis 75% der maximalen Betätigung der Bremseinrichtung gewählt ist.

10. Verfahren nach Anspruch 8 oder 9, **gekennzeichnet durch** die Schritte:
b1) Feststellen, ob sich das Fahrpedal (9) im wesentlichen in seinen Nullage befindet,
b2) Betätigen einer Bremseinrichtung (1,2,3,4) des Fahrzeuges für einen begrenzten Zeitraum , wenn der erste Grenzwert überschritten wird und sich das Fahrpedal (9) im wesentlichen in seinen Nullage befindet.

11. Verfahren nach Anspruch 8, 9 oder 10, **gekennzeichnet durch** die Schritte:
c) Vergleichen einer Betätigungsgeschwindigkeit eines Bremspedales (10) mit einen dritten Grenzwert (LPB1) im Betätigungssinne des Bremspedales,
d) Betätigen der Bremseinrichtung (1,2,3,4) des Fahrzeuges, wenn der dritte Grenzwert überschritten wird und das Betätigen der Bremseinrichtung (1,2,3,4) für einen begrenzten Zeitraum noch andauert.

12. Verfahren nach einem der Ansprüche 8 bis 11, **gekennzeichnet durch** die Schritte:
e) Vergleichen der Betätigungsgeschwindigkeit des Bremspedales (10) mit einen vierten Grenzwert (LPB2) im im Sinne einer Rücknahme des Bremspedales überschreitet,
f) Betätigen der Bremseinrichtung (1,2,3,4) abhängig von der Stellung des Bremspedales betätigt, wenn der vierte Grenzwert überschritten wird.

13. Verfahren nach einem der Ansprüche 8 bis 12, **gekennzeichnet durch** die Schritte:
g) Feststellen, ob sich das Bremspedal (10) im wesentlichen in seinen Nullage befindet,
h) Unbedingtes Beenden der Betätigung der Bremseinrichtung (1,2,3,4), wenn die Feststellung zutrifft.

14. Verfahren nach Anspruch 12, **gekennzeichnet durch** den Schritt:
d) Betätigen der Bremseinrichtung (1,2,3,4) des Fahrzeuges für zumindest einen Zeitraum im Bereich von 0,1 bis 0,4 sec unabhängig von der Stellung des Bremspedales (10), wenn der dritte Grenzwert überschritten wird und das Betätigen der Bremseinrichtung (1,2,3,4) für einen begrenzten Zeitraum noch andauert.

## Claims

1. A device for shortening the braking distance in vehicles with a first comparison device (14), which emits a first signal when the actuation speed of an accelerator pedal (9) exceeds a first limit value (**LDK**) in the direction of a return of the accelerator pedal, and an actuating device (7) for a braking device (1, 2, 3, 4) of the vehicle, wherein the actuating device actuates the braking device as a function of the first signal, wherein the actuation of the braking device by the actuating device (7) takes place for a limited period of time, **characterized in that** the period of a maximum actuation of the braking device (1, 2, 3, 4) by the actuating device (7) is selected in such a way that it covers a moment in time at which the braking device is actuated as a reflex by an ordinary driver in an emergency situation.

2. A device according to Claim 1, **characterized in that** the period of time of actuating the braking device (1, 2, 3, 4) is in the range of from 0·3 sec to 0·5 sec and a maximum of the actuation is selected to be in the range of from 50% to 75% of the maximum actuation of the braking device.

3. A device according to Claim 1 or 2, **characterized in that** a second comparison device (15) or a first transmitter is provided, which emits a second signal when the accelerator pedal (9) is substantially present in its neutral position, wherein the actuating device (7) actuates the braking device when both the first signal and the second signal are present.

4. A device according to Claim 1, 2 or 3, **characterized in that** a third comparison device (16) is provided which emits a third signal when the actuation speed of the brake pedal (10) exceeds a third limit value (**LPB1**) in the direction of actuating the brake pedal, wherein the actuating device (7) actuates the braking device (1, 2, 3, 4) independently of the position of the brake pedal if the third signal is present during the actuation - limited in time - of the braking device.

5. A device according to one of the preceding Claims, **characterized in that** a fourth comparison device is provided (17) which emits a fourth signal when the actuation speed of the brake pedal (10) exceeds a fourth limit value (**LPB2**) in the direction of a return of the brake pedal, and the actuating device actuates the braking device (1, 2, 3, 4) as a function of the position of the brake pedal when the fourth signal is present.

6. A device according to one of the preceding Claims, **characterized in that** a fifth comparison device (18) or a second transmitter is provided which emits a fifth signal when the brake pedal (10) is substantially present in its neutral position, and wherein the actuating device (7) is switched off unconditionally when the fifth signal is present.

7. A device according to Claim 4, **characterized in that** the actuating device (7) actuates the braking device (1, 2, 3, 4) independently of the position of the brake pedal (10) at least for a period of time in the range of from 0·1 to 0·4 sec when the third signal is present.

8. A method of shortening the braking distance in vehicles having the following steps:
a) comparing an actuation speed of an accelerator pedal (9) with a first limit value (**LDK**) in the direction of a return of the accelerator pedal,
b) actuating a braking device (1, 2, 3, 4) of the vehicle when the first limit value is exceeded,
b) actuating a braking device (1, 2, 3, 4) of the vehicle for a limited period when the first limit value is exceeded,
**characterized in that** the period of a maximum actuation of the braking device (1, 2, 3, 4) by the actuating device (7) is selected in such a way that it covers a moment in time at which the braking device is actuated as a reflex by an ordinary driver in an emergency situation.

9. A method according to Claim 8, **characterized in that** the period of time of actuating the braking device (1, 2, 3, 4) is in the range of from 0·3 sec to 0·5 sec and a maximum of the actuation is selected to be in the range of from 50% to 75% of the maximum actuation of the braking device.

10. A method according to Claim 8 or 9, **characterized by** the steps:
b1) establishing whether the accelerator pedal (9) is substantially present in its neutral position,
b2) actuating a braking device (1, 2, 3, 4) of the vehicle for a limited period when the first limit value is exceeded and the accelerator pedal (9) is substantially present in its neutral position.

11. A method according to Claim 8, 9 or 10, **characterized by** the steps:
c) comparing an actuation speed of the brake pedal (10) with a third limit value (**LPB1**) in the direction of actuating the brake pedal,
d) actuating the braking device (1, 2, 3, 4) of the vehicle when the third limit value is exceeded and the actuation of the braking device (1, 2, 3, 4) still lasts for a limited period.

12. A method according to one of Claims 8 to 11, **characterized by** the steps:
e) comparing the actuation speed of the brake pedal (10) with a fourth limit value (**LPB2**) in the direction of a return of the brake pedal,
f) actuating the braking device (1, 2, 3, 4) as a function of the position of the brake pedal when the fourth limit value signal is exceeded.

13. A method according to one of Claims 8 to 12, **characterized by** the steps:
g) establishing whether the brake pedal (10) is substantially present in its neutral position,
h) unconditionally terminating the actuation of the braking device (1, 2, 3, 4) when the establishment applies.

14. A method according to Claim 12, **characterized by** the step:
d) actuating the braking device (1, 2, 3, 4) of the vehicle for at least a period of time in the range of from 0·1 to 0·4 sec independently of the position of the brake pedal (10) when the third limit value is exceeded and the actuation of the braking device (1, 2, 3, 4) still lasts for a limited period.

## Revendications

1. Dispositif pour raccourcir la distance de freinage des véhicules comprenant un premier ensemble de comparaison (14) fournissant un premier signal lorsque la vitesse d'actionnement d'une pédale d'accélération (9) dépasse une première valeur limite (LDK) dans le sens d'un relâchement de la pédale d'accélération, et comprenant un dispositif d'actionnement (7) pour un module de freinage (1, 2, 3, 4) du véhicule, le dispositif d'actionnement actionnant le module de freinage en fonction du premier signal, l'actionnement du module de freinage par le dispositif d'actionnement (7) étant effectué sur une durée limitée, **caractérisé en ce que** la durée d'un actionnement maximal du module de freinage (1, 2, 3, 4) par le dispositif d'actionnement (7) est choisie de telle manière qu'elle comprend un moment où le module de freinage est actionné par réflexe par un conducteur normal dans une situation d'urgence.

2. Dispositif selon la revendication 1, **caractérisé en ce que** la durée d'actionnement du module de freinage (1, 2, 3, 4) est comprise entre 0,3 sec. et 0,5 sec., et **en ce qu'**un maximum de l'ordre de 50% à 75% d'actionnement maximal du module de freinage est choisi.

3. Dispositif selon la revendication 1 ou 2, **caractérisé en ce qu'**un deuxième ensemble de comparaison (15) ou un premier capteur est prévu, fournissant un deuxième signal lorsque la pédale d'accélération (9) se trouve pour l'essentiel dans sa position zéro, le dispositif d'actionnement (7) actionnant le module de freinage en présence aussi bien du premier que du deuxième signal.

4. Dispositif selon la revendication 1, 2 ou 3, **caractérisé en ce qu'**un troisième ensemble de comparaison (16) est prévu, fournissant un troisième signal lorsque la vitesse d'actionnement de la pédale de frein (10) dépasse une troisième valeur limite (LPB1) dans le sens de l'actionnement de la pédale de frein, le dispositif d'actionnement (7) actionnant le module de freinage (1, 2, 3, 4) indépendamment de la position de la pédale de frein, lorsque le troisième signal est présent au cours de l'actionnement limité dans le temps du module de freinage.

5. Dispositif selon l'une des revendications précédentes, **caractérisé en ce qu'**un quatrième ensemble de comparaison (17) est prévu, fournissant un quatrième signal lorsque la vitesse d'actionnement de la pédale de frein (10) dépasse une quatrième valeur limite (LPB2) dans le sens d'un relâchement de la pédale de frein et que le dispositif d'actionnement actionne le module de freinage (1, 2, 3, 4) en fonction de la position de la pédale de frein en présence du quatrième signal.

6. Dispositif selon l'une des revendications précédentes, **caractérisé en ce qu'**un ensemble de comparaison (18) ou un deuxième capteur est prévu, fournissant un cinquième signal lorsque la pédale de frein (10) se trouve pour l'essentiel dans sa position zéro, le dispositif d'actionnement (10) étant obligatoirement suspendu en présence du cinquième signal.

7. Dispositif selon la revendication 4, **caractérisé en ce que** le dispositif d'actionnement (7) actionne le module de freinage (1, 2, 3, 4) indépendamment de la position de la pédale de frein (10) au moins pendant une durée de l'ordre de 0,1 à 0,4 sec. en présence du troisième signal.

8. Procédé pour raccourcir la distance de freinage de véhicules comprenant les étapes suivantes :
a) comparaison d'une vitesse d'actionnement d'une pédale d'accélération (9) avec une première valeur limite (LDK) dans le sens d'un relâchement de la pédale d'accélération,
b) actionnement d'un module de freinage (1, 2, 3, 4) du véhicule lorsque la première valeur limite est dépassée,
c) actionnement d'un module de freinage (1, 2, 3, 4) du véhicule pour une durée limitée lorsque la première valeur limite est dépassée,
**caractérisé en ce que** la durée d'un actionnement maximal du module de freinage (1, 2, 3, 4) par le dispositif d'actionnement (7) est choisie de telle manière qu'elle comprend un moment où le module de freinage est actionné par réflexe par un conducteur normal dans une situation d'urgence.

9. Procédé selon la revendication 8, **caractérisé en ce que** la durée d'actionnement du module de freinage (1, 2, 3, 4) est comprise entre 0,3 sec. et 0,5 sec. et qu'un maximum de l'ordre de 50% à 75% d'actionnement maximal du module de freinage est choisi.

10. Procédé selon la revendication 8 ou 9, **caractérisé par** les étapes :
b1) constater si la pédale d'accélération se trouve pour l'essentiel dans sa position zéro,
b2) actionner un module de freinage (1, 2, 3, 4) du véhicule pour une durée limitée, lorsque la première valeur limite est dépassée et que la pédale d'accélération (9) se trouve pour l'essentiel dans sa position zéro.

11. Procédé selon la revendication 8, 9 ou 10, **caractérisé par** les étapes :
c) comparer une vitesse d'actionnement d'une pédale de frein (10) avec une troisième valeur limite (LPB1) dans le sens de l'actionnement de la pédale de frein,
d) actionner le module de freinage (1, 2, 3, 4) du véhicule lorsque la troisième valeur limite est dépassée et que l'actionnement du module de freinage (1, 2, 3, 4) dure encore pendant un temps limité.

12. Procédé selon l'une des revendications 8 à 11, **caractérisé par** les étapes :
e) comparer la vitesse d'actionnement de la pédale de frein (10) avec une quatrième valeur limite (LPB2) dans le sens d'un relâchement de la pédale de frein,
f) actionner le module de freinage (1, 2, 3, 4) en fonction de la position de la pédale de frein lorsque la quatrième valeur limite est dépassée.

13. Procédé selon l'une des revendications 8 à 12, **caractérisé par** les étapes :
g) constater si la pédale de frein (10) se trouve pour l'essentiel dans sa position zéro,
h) suspendre obligatoirement l'actionnement du module de freinage (1, 2, 3, 4) si la constatation est exacte.

14. Procédé selon la revendication 12, **caractérisé par** l'étape :
d) actionner le module de freinage (1, 2, 3, 4) du véhicule pour au moins une durée de l'ordre de 0,1 à 0,4 sec. indépendamment de la position de la pédale de frein (10) lorsque la troisième valeur limite est dépassée et que l'actionnement du module de freinage (1, 2, 3, 4) dure encore pendant un temps limité.
